# EUROPEAN PATENT APPLICATION

(11) **EP 4 579 886 A1**
(43) Date of publication of application: **02.07.2025**
(21) Application number: 24223137.1
(22) Date of filing: 23.12.2024
(51) Int. Cl.: H01M 10/658, H01M 50/593, H01M 50/242, H01M 50/293, H01M 50/211, H01M 50/502

(54) **BATTERY ASSEMBLY**

(30) Priority: 29.12.2023 KR 20230196118
(71) Applicant: SK On Co., Ltd., Seoul 03161 (KR)
(72) Inventor: KIM, Ji San, 34124 Daejeon (KR); KU, Bon Seok, 34124 Daejeon (KR); MIN, Yun Kyung, 34124 Daejeon (KR); LEE, Jong Chan, 34124 Daejeon (KR); Hyun Kyu, LEE, 34124 Daejeon (KR); JANG, Jin A, 34124 Daejeon (KR)
(74) Representative: Stolmár & Partner Patentanwälte PartG mbB

(57) **Abstract**

A battery assembly which comprises a case (30), a plurality of battery cells (10) accommodated in a first inner space of the case, and a plurality of particle-shaped insulating materials (80) accommodated in a second inner space of the case.

## Description

### TECHNICAL FIELD

The technology and implementations disclosed in this patent document generally relate to a secondary battery, and more specifically, to a battery assembly.

### BACKGROUND

Secondary batteries are batteries that can be charged and discharged multiple times. A secondary battery may be composed of battery cells or battery assemblies (e.g., battery modules, battery packs, etc.), each of which is composed of multiple battery cells. When heat or gas is generated in a battery cell within a battery assembly, it can affect adjacent battery cells, leading to stability issues such as accelerating heat propagation, and therefore, technologies aimed at improving the stability of the battery cell and battery assembly are required.

### SUMMARY

The disclosed technology can be implemented in some embodiments to provide a battery assembly with improved stability.

The disclosed technology can be applied in the field of green technology such as such solar power generation and wind power generation. In addition, the disclosed technology can be directly or indirectly applied to eco-friendly devices such as electric vehicles and hybrid vehicles to prevent air pollution and climate change by suppressing greenhouse gas emissions.

A battery assembly based on an embodiment of the disclosed technology may include: a case; a plurality of battery cells accommodated in a first inner space of the case; and a plurality of particle-shaped insulating materials accommodated in a second inner space of the case. In some embodiments of the disclosed technology, the term "particle-shaped insulating materials" can indicate particulate insulating materials.

In an embodiment, one of the plurality of particle-shaped insulating materials may have a hardness value that is higher than or equal to a first hardness value and lower than or equal to a second hardness value that is higher than the first hardness value. The first hardness value may be higher than the hardness value at which the particle-shaped insulating material is damaged by vibration.

In an embodiment, the first hardness value may be Shore hardness A5.

In an embodiment, each of the plurality of battery cells may include an electrode assembly and an exterior material accommodating the electrode assembly, and the second hardness value may be lower than the hardness of the exterior material.

In an embodiment, the second hardness value may be Shore hardness A95.

In an embodiment, each of the plurality of battery cells may include: an electrode assembly; a main body structured to accommodate the electrode assembly; and an electrode tab protruding from the main body, wherein the battery assembly may further include a busbar disposed between the main body of the plurality of battery cells and the case and electrically connected to the electrode tab, wherein a filling ratio of the particle-shaped insulating material disposed between the main body of the plurality of battery cells and a bus bar, among the plurality of particle-shaped insulating materials, may be higher than the filling ratio of the particle-shaped insulating material disposed between the bus bar and the case.

In an embodiment, a withstand voltage corresponding to a diameter of at least one particle-shaped insulating material of the plurality of particle-shaped insulating materials may be higher than or equal to a first withstand voltage.

In an embodiment, each of the plurality of battery cells may include: an electrode assembly; an exterior material structured to accommodate the electrode assembly; and an electrode tab protruding from the exterior material, and the first withstand voltage may be higher than a value obtained by dividing an overvoltage applied to the electrode tab by the diameter of at least one particle-shaped insulating material of the plurality of particle-shaped insulating materials.

In an embodiment, the first withstand voltage may be 1 kV/mm.

In an embodiment, the withstand voltage of the at least one particle-shaped insulating material may be 30 kV/mm or less.

In an embodiment, a cross-sectional shape of the at least one of the plurality of particle-shaped insulating materials may be at least one of a circular shape, an elliptical shape, a polygonal shape, or an amorphous shape.

In an embodiment, the at least one particle-shaped insulating material may include a core and a coating portion covering the core.

In an embodiment, each of the core and the coating portion may include at least one of an inorganic material or a foam material.

In an embodiment, one of the core and the coating portion may include a material that is not included in the other.

In an embodiment, the at least one of the plurality of particle-shaped insulating materials may exhibits at least one property of thermal insulation and flame retardancy.

In an embodiment, a diameter of the at least one of the plurality of particle-shaped insulating materials may be 1 mm or more and 15 mm or less.

In an embodiment, each of the plurality of battery cells may include an exterior material structured by accommodate an electrode assembly and an electrode tab protruding from the exterior material, wherein one or more of the plurality of particle-shaped insulating materials may be disposed between the electrode tabs of the plurality of battery cells.

In an embodiment, the battery assembly further includes an auxiliary member disposed in a third inner space adjacent to the plurality of battery cells, wherein a proportion of a volume of a total volume of the plurality of particle-shaped insulating materials to a volume of the second inner space may be 25% or more and 90% or less.

In an embodiment, the case may include an upper case disposed on an upper side of the plurality of battery cells, wherein one or more of the plurality of particle-shaped insulating materials may be disposed between the plurality of battery cells and the upper case.

The disclosed technology can be implemented in some embodiments to provide a battery assembly with improved stability.

The disclosed technology can be implemented in some embodiments to provide a battery assembly with improved thermal insulation.

The disclosed technology can be implemented in some embodiments to provide a battery assembly with improved electrical insulation.

### BRIEF DESCRIPTION OF THE DRAWINGS

FIG. 1 shows an exploded diagram illustrating a battery assembly based on an embodiment.
FIG. 2 shows a diagram illustrating a battery assembly with an upper case removed therefrom based on an embodiment.
FIG. 3 shows a diagram illustrating a battery assembly including a plurality of particle-shaped insulating materials based on an embodiment.
FIG. 4 shows a diagram illustrating a battery assembly including the plurality of particle-shaped insulating materials based on another embodiment.
FIG. 5 shows an enlarged diagram of the plurality of particle-shaped insulating materials based on an embodiment.
FIG. 6 shows a diagram illustrating examples shapes of the particle-shaped insulating materials based on an embodiment.

### DETAILED DESCRIPTION

The structural or functional descriptions of embodiments disclosed in this patent document are merely illustrated for the purpose of explaining embodiments of the disclosed technology, and embodiments of the disclosed technology may be implemented in various forms in addition to the embodiments disclosed in this patent document. In addition, the disclosed technology is not construed as being limited to the embodiments described in this patent document.

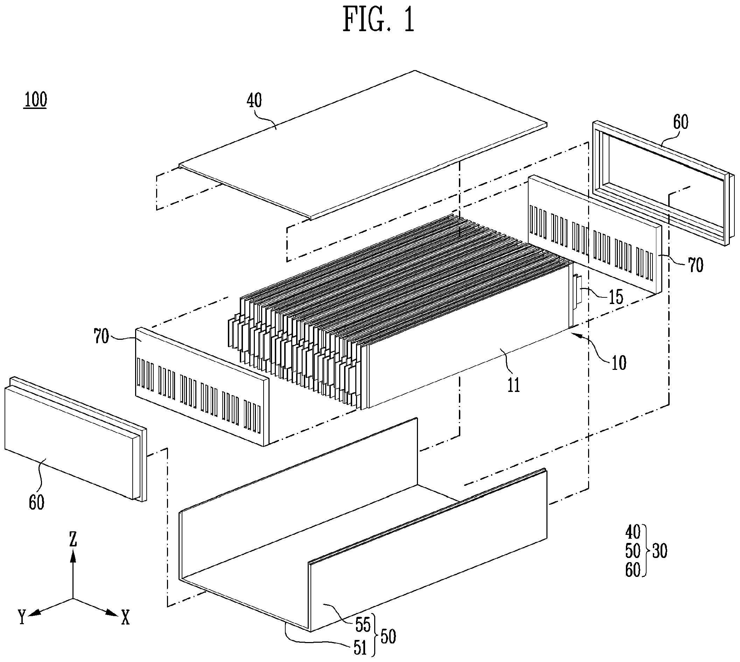

FIG. 1 shows an exploded diagram illustrating a battery assembly based on an embodiment.

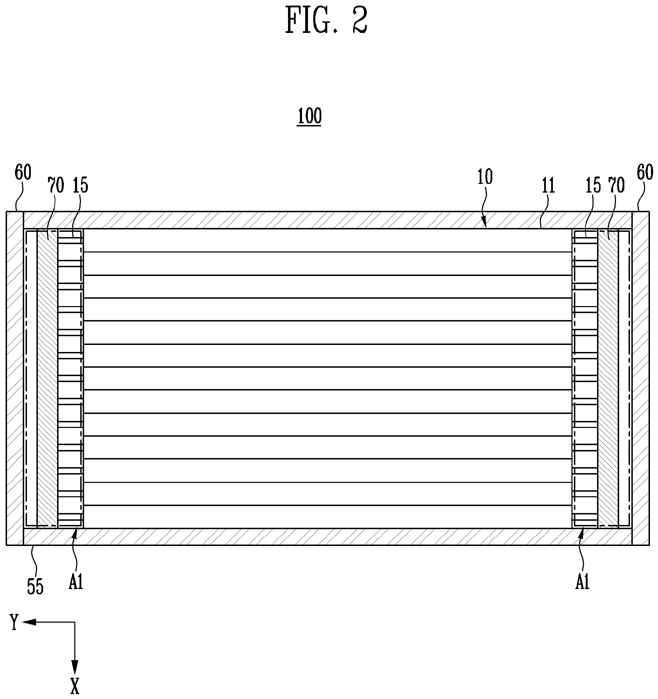

FIG. 2 shows a diagram illustrating a battery assembly with an upper case removed therefrom.

FIG. 1 and FIG. 2 are diagrams for explaining a battery assembly based on an embodiment.

Referring to FIGS. 1 and 2, a battery assembly 100 based on an embodiment may include a plurality of battery cells 10 and a case 30. For example, a battery assembly 100 may correspond to various devices such as a battery module, a battery pack, or an energy storage system (ESS).

A plurality of battery cells 10 may be accommodated in an inner space of a case 30. Each of the plurality of battery cells 10 may be a secondary battery capable of being charged and discharged multiple times. For example, a secondary battery may be one of various types, such as a lithium ion battery, a lithium polymer battery, a nickel hydrogen battery, a nickel cadmium battery, a sodium battery, or a solid-state battery.

Each of the plurality of battery cells 10 may include a main body 11 and an electrode tab 15.

A main body 11 may include an electrode assembly and an exterior material. The electrode assembly may include a plurality of electrodes and an electrolyte. The electrodes may include an anode and a cathode. The anode and cathode may be alternately stacked. The anode and cathode may convert chemical energy into electrical energy through a redox reaction. In an embodiment, an electrode assembly may further include a separator. The separator may be disposed between a cathode and an anode so that the anode and the cathode do not contact with each other. The electrolyte may be, for example, a medium that transfers ions or a current between a cathode and an anode.

An exterior material may accommodate an electrode assembly. For example, an exterior material may surround an electrode assembly. In some embodiments, the space enclosed or surrounded by the exterior material may be referred to as "inner space." In some embodiments, an electrode assembly may be accommodated in the inner space of the exterior material. In an embodiment, an exterior material may be a pouch film. In one example, a part of the exterior material may be sealed while an electrode assembly is accommodated in an inner space of the exterior material. For example, while an exterior material surrounds or wraps around an electrode assembly, a part of the exterior material may come into contact with another part, and the contacted area may be sealed through pressing and/or heating. In an embodiment, the pouch film may include at least one of nylon, aluminum, or chlorinated polypropylene (CPP). The above-described embodiment is only one example, and the exterior material may have various shapes such as a prismatic shape or a cylindrical shape, and may be implemented to include various materials such as aluminum, an alloy material, and/or a composite material.

An electrode tab 15 may be electrically connected to an electrode assembly. For example, an electrode tab 15 may include an anode tab connected to an anode of an electrode assembly and a cathode tab connected to a cathode of the electrode assembly. In an embodiment, a part of an electrode tab 15 may be accommodated in an inner space of an exterior material, and another part may protrude from the exterior material. A part of an electrode tab 15 accommodated in an inner space of an exterior material may be connected to an electrode of an electrode assembly.

An electrode tab 15 may protrude from an exterior material of a main body 11. For example, an electrode tab 15 may protrude in a first horizontal direction (e.g., Y-axis direction). In some implementations, the first horizontal direction (e.g., Y-axis direction), a second horizontal direction (e.g., X-axis direction), and a height direction (e.g., Z-axis direction) may be directions that are perpendicular to each other. However, the disclosed technology is not limited thereto, and the protruding direction of an electrode tab 15 may be variously modified and implemented to be arranged in different directions, such as in the height direction (e.g., Z-axis direction). In an embodiment, a pair of electrode tabs 15 may each protrude from the same side end of an exterior material. In another embodiment, a pair of electrode tabs 15 may each protrude from different side ends of an exterior material.

In an embodiment, a plurality of battery cells 10 may be stacked and disposed within an inner space. For example, a plurality of battery cells 10 may be stacked along a second horizontal direction (e.g., X-axis direction). As another example, a plurality of battery cells 10 may be stacked along a height direction (e.g., Z-axis direction).

A case 30 may accommodate a plurality of battery cells 10. For example, a case 30 may form an inner space. Here, the inner space may be a space enclosed or surrounded by the case 30. In an embodiment, a case 30 may include a hexahedron with an empty inner space, but is not limited thereto and may be formed in various shapes.

In an embodiment, a case 30 may include an upper case 40, a lower case 50, and side cases 60. In an embodiment, an upper case 40, a lower case 50, and side cases 60 may be combined to each other using, e.g., welding, bolts, and others.

An upper case 40 may be disposed on an upper side of a plurality of battery cells 10. In some implementations, the upper side may represent an upper portion of the plurality of battery cells 10 in a positive height direction (e.g., +Z-axis direction). A lower case 50 may be disposed on a lower side of the plurality of battery cells 10. In some implementations, the lower side may represent a lower portion of the plurality of battery cells 10 in a negative height direction (e.g., -Z-axis direction). Side cases 60 may be disposed on the left and right sides of a plurality of battery cells 10. In some implementations, the left side may represent a side portion of the plurality of battery cells 10 in a positive first horizontal direction (e.g., +Y-axis direction), and the right side may represent a side portion of the plurality of battery cells 10 in a negative first horizontal direction (e.g., -Y-axis direction). In an embodiment, a battery assembly 100 may further include a busbar 70 disposed between a side case 60 and a plurality of battery cells 10.

In an embodiment, a lower case 50 may include a lower plate 51 and end plates 55. A lower plate 51 may be disposed on the lower side of a plurality of battery cells 10. A lower plate 51 may support a plurality of battery cells 10. End plates 55 may be disposed on each of the front and rear sides of the plurality of battery cells 10. In some implementations, the front side may represent a side portion of the plurality of battery cells 10 in a positive second horizontal direction (e.g., +X-axis direction), and the rear side may represent a side portion of the plurality of battery cells 10 in a negative second horizontal direction (e.g., -X-axis direction). A pair of end plates 55 may apply pressure to a main body 11 of a plurality of battery cells 10 disposed therebetween. FIG. 1 illustrates a lower plate 51 and end plates 55 as being manufactured as a single integrated component, but this is merely one example, and a lower plate 51 and end plates 55 may be manufactured as separate components.

In an embodiment, a battery assembly 100 may further include an auxiliary member related to a battery cell. In some implementations, the term "auxiliary member" may be used to indicate components, materials, and/or structures that enhance the functionality and/or structural stability of the battery cell. An auxiliary member may be accommodated in an inner space of a case 30. In an embodiment, an auxiliary member may include a bus bar 70. The bus bar 70 may electrically connect an electrode tab 15 of a battery cell to another electrode tab 15 of another battery cell among a plurality of battery cells 10. In this case, the two battery cells may be electrically connected to each other through the bus bar 70. For example, electrode tabs 15 and a bus bar may be welded together while in contact, allowing them to be joined. Each of a bus bar 70 and electrode tabs 15 may include a conductive material. The conductive material may refer to a material having an electrical conductivity higher than a reference value, such as copper, gold, or silver. In an embodiment, an auxiliary member may include at least one of various auxiliary materials related to the function of a battery cell 10, such as a cooling plate and a thermal adhesive.

In an embodiment, a battery assembly 100 may further include a plurality of particle-shaped insulating materials. The plurality of particle-shaped insulating materials may be accommodated in an inner space of a case 30.

The disclosed technology can be implemented in some embodiments to improve the stability of a battery assembly 100 and the thermal insulation and/or electrical insulation of a battery assembly 100. Hereinafter, a battery assembly 100 will be described in more detail with reference to the attached drawings.

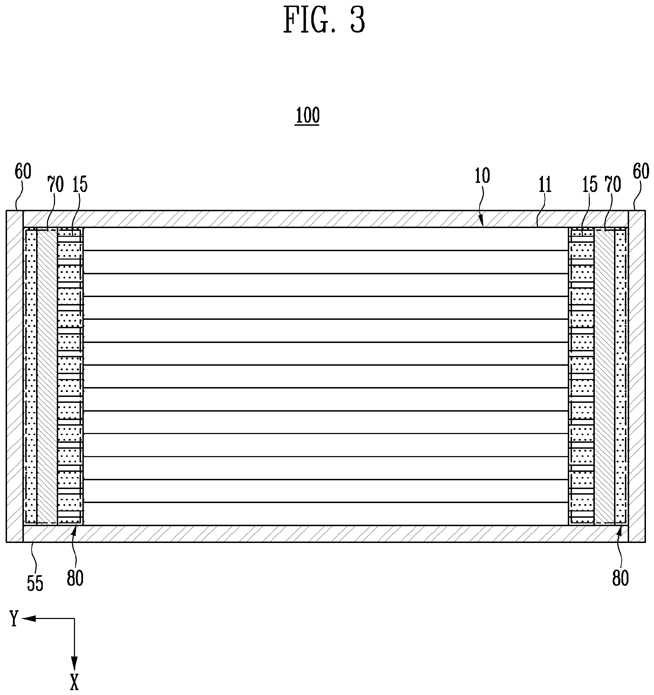

FIG. 3 shows a diagram illustrating a battery assembly 100 including a plurality of particle-shaped insulating materials 80 based on an embodiment.

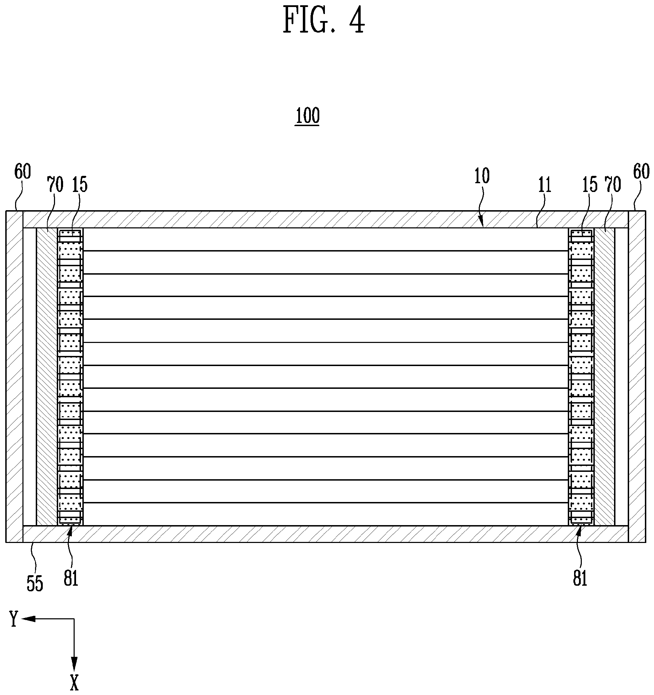

FIG. 4 shows a diagram illustrating a battery assembly 100 including a plurality of particle-shaped insulating materials 80 based on another embodiment.

Referring to FIGS. 1, 3, and 4, a battery assembly 100 based on an embodiment may include a case 30; a plurality of battery cells 10 accommodated in a portion of an inner space of the case 30; and a plurality of particle-shaped insulating materials 80 accommodated in another portion of the inner space of the case 30.

In an embodiment, the plurality of battery cells 10 accommodated in a first inner space of the case; and the plurality of particle-shaped insulating materials in a second inner space of the case.

In an embodiment, the inner space may include a first inner space, a second inner space and a third inner space, which are not physically divided within the case.

In an embodiment, the first inner space may refer to a space occupied by the plurality of battery cells 10 within the case, the third inner space may refer to a space occupied by the auxiliary member, and the second inner space may refer to a space other than the first inner space and the third inner space within the case.

A plurality of battery cells 10 and a plurality of particle-shaped insulating materials 80 may be accommodated in an inner space of a case 30. The particle-shaped insulating materials 80 may be disposed (or fill a portion of the inner space) after the plurality of battery cells 10 are disposed in the inner space of the case 30. For example, a plurality of particle-shaped insulating materials 80 may be disposed in an empty space excluding the space occupied by a plurality of battery cells 10 (or a plurality of battery cells 10 and an auxiliary member) in an inner space of a case 30.

In an embodiment, each of the plurality of battery cells 10 may include an exterior material accommodating an electrode assembly and an electrode tab 15 protruding from the exterior material, and some of the plurality of particle-shaped insulating materials 80 may be disposed between the electrode tabs 15 of the plurality of battery cells 10.

In an embodiment, some of the plurality of particle-shaped insulating materials 80 may be disposed between electrode tabs 15 of a plurality of battery cells 10. In one example, the plurality of particle-shaped insulating materials 80 may include a particle-shaped insulating material disposed between an electrode tab 15 of a battery cell 10 and an electrode tab of another battery cell. In an embodiment, some of the plurality of particle-shaped insulating materials 80 may be disposed between an electrode tab 15 of a battery cell 10 and a bus bar 70.

In an embodiment, some of the plurality of particle-shaped insulating materials 80 may be placed between a plurality of battery cells 10 and an upper case 40 of a case 30. In one example, the plurality of particle-shaped insulating materials 80 may include a particle-shaped insulating material disposed between a plurality of battery cells 10 and an upper case 40.

In an embodiment, the properties of one particle-shaped insulating material of a plurality of particle-shaped insulating materials 80 may include electrical insulation. In an embodiment, the properties of each of a plurality of particle-shaped insulating materials 80 may include electrical insulation. For example, a particle-shaped insulating material 80 may be a material having a resistivity higher than a certain threshold level or a reference value. In some implementations, the resistivity (or specific resistance) of a material may quantitatively represent its electrical insulation property, which refers to its ability to impede the flow of electric current. For example, the higher the resistivity, the better the electrical insulation, meaning the flow of electric current may be more effectively blocked. In some embodiments of the disclosed technology, the particle-shaped insulating material 80 can prevent a current from flowing to an unintended location from an electrode tab 15 or a bus bar 70.

In an embodiment, the properties of one particle-shaped insulating material of a plurality of particle-shaped insulating materials 80 may further include at least one of thermal insulation and flame retardancy. In an embodiment, the properties of each of a plurality of particle-shaped insulating materials 80 may further include at least one of thermal insulation and flame retardancy. For example, with respect to thermal insulation, a particle-shaped insulating material may be a material having thermal conductivity lower than or equal to a reference value. In some implementations, thermal conductivity may quantitatively represent the material's thermal insulation property, which refers to its ability to impede heat transfer. For example, the lower the thermal conductivity, the better the thermal insulation, meaning heat transfer may be more effectively blocked. In some embodiments of the disclosed technology, heat transfer from a battery cell 10 to an adjacent battery cell may be minimized by a particle-shaped insulating material 80.

For example, with respect to flame retardancy, a particle-shaped insulating material may be a material that releases a total heat amount below a certain threshold level or reference value when heated for a specific time. In some implementations, flame retardancy may refer to the material's property of being resistant to catching fire. For example, the less the total heat released, the better the flame retardancy, meaning the material is less likely to burn. In some embodiments of the disclosed technology, the phenomenon of combustion may be minimized by a particle-type insulating material 80.

In an embodiment, a battery assembly may further include an auxiliary member for a battery cell 10 in a portion of the inner space, and the proportion of the total volume of the plurality of particle-shaped insulating materials 80 to a volume of the second inner space may be 25% or more and 90% or less.

In an embodiment, the auxiliary member accommodated in the third inner space of the case.

In an embodiment, a battery assembly 100 may further include an auxiliary member for a battery cell. In an example, an auxiliary member may be accommodated in an inner space of a case 30. In an example, an auxiliary member may include a bus bar 70.

In an embodiment, the proportion of a the total volume of the plurality of particle-shaped insulating materials 80 to a volume corresponding to an inner space of a case 30 excluding a plurality of battery cells 10 and an auxiliary member may be 25% or more and 90% or less. In an embodiment, when the proportion is less than 25%, the amount of a particle-shaped insulating material 80 may be insufficient, making it difficult to prevent a flow of high-temperature gases and/or particles in a thermal runaway situation of a battery cell 10. Heat may easily be transmitted to adjacent battery cells due to the flow of high-temperature gases and/or particles. In an embodiment, when the proportion is more than 90%, the weight of a battery assembly 100 increases, which may reduce energy efficiency, especially when the battery assembly 100 is applied to a mobility device such as a vehicle due to the increased weight.

For example, the volume of the entire inner space of a case 30 excluding a plurality of battery cells 10 and an auxiliary member may be a value obtained by subtracting the volume of the plurality of battery cells 10 and the auxiliary member accommodated in the inner space of the case 30 from the total volume of the inner space of the case 30. In some implementations, the percentage value obtained by dividing the total volume of the plurality of particle-type insulating materials 80 by the above value may be the above proportion.

In an embodiment, a particle-shaped insulating material 80 may be in a solid state. The particle-shaped insulating material 80 implemented based on some embodiments of the disclosed technology may prevent the issue of leakage through a gap of the case 30 that may occur when a liquid-state filling material is injected into an inner space of a case 30.

The particle-shaped insulating material 80 implemented based on some embodiments of the disclosed technology may prevent issues such as gaps and uneven filling that may occur the structure and shape of the inner space when a solid-state filling member formed as an integral type is inserted into the inner space of the case 30.

In an embodiment, referring to FIG. 4, a battery assembly 100 may further include a bus bar 70 electrically connecting a plurality of battery cells 10. Each of a plurality of battery cells 10 may include a main body 11 accommodating an electrode assembly and an electrode tab 15 protruding from the main body 11. A bus bar 70 may be disposed between a main body 11 and a side case 60 of a case 30. A bus bar 70 may be electrically connected to an electrode tab 15.

In an embodiment, the filling rate of a particle-shaped insulating material 81 accommodated between a main body 11 and a bus bar 70 may be greater than the filling rate of a particle-shaped insulating material accommodated between the bus bar 70 and a side case 60 of a case 30. The filling rate may represent a proportion (e.g., unit %) of the total volume of the particle-shaped insulating material occupying the space relative to the volume of the corresponding space. In some embodiments, the particle-shaped insulating material 81 is disposed between the main body 11 and the bus bar 70, and the particle-shaped insulating material is not disposed between the bus bar 70 and the side case 60 of the case 30.

As discussed above, by lowering the filling rate between the bus bar 70 and the side case 60 of the case 30, the weight increase due to an unnecessary particle-shaped insulating material may be minimized and the material cost may be reduced. In some implementations, by increasing the filling rate between the main body 11 and the bus bar 70, when swelling occurs in a battery cell 10 due to charge/discharge cycles of the battery cell 10, the particle-shaped insulating material 81 may apply pressure to the main body 11, thereby achieving uniform surface pressure. This can prevent or delay venting, where the main body 11 may open. Accordingly, the lifespan of the battery cell 10 may be extended.

In an embodiment, a battery assembly 100 may include a shielding member covering a bus bar 70. In an embodiment, a shielding member may be disposed between a bus bar 70 and a side case 60. In this case, it can prevent the flow of a residual gas through a space between the bus bar 70 and the side case 60.

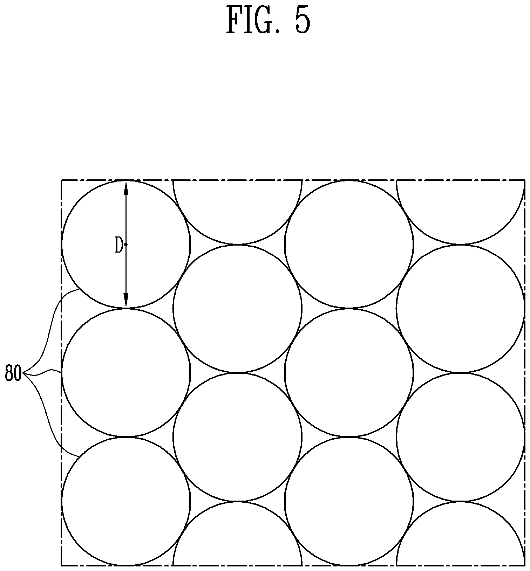

FIG. 5 shows an enlarged diagram of the plurality of particle-shaped insulating materials based on an embodiment. Figure 5 shows a plurality of particle-shaped insulating materials filled into an inner space of a case.

Referring to FIGS. 3, 4, and 5, the diameter D of at least one of the plurality of particle-shaped insulating materials 80 may be 1 mm or larger and 15 mm or smaller. In an embodiment, the diameter D of each of the plurality of particle-shaped insulating materials 80 may be 1 mm or larger and 15 mm or smaller. In other words, the lower limit may be 1 mm, and the upper limit may be 15 mm. Due to the diameter D of 1 mm or larger, a particle-shaped insulating material 80 may prevent leakage through a gap of a case 30 or intrusion into the interior of a battery cell 10. The particle-shaped insulating material 80 may be disposed between a battery cell 10 and a bus bar 70. To this end, the particle-shaped insulating material 80 may have a diameter smaller than the thickness of a battery cell 10. For example, the thickness of a battery cell 10 may be 15 mm. In this case, the diameter D of the particle-shaped insulating material 80 may be 15 mm or less. The lower limit and the upper limit of the diameter D are only an example, and the lower limit and the upper limit of the diameter D may be modified to have various values depending on the tolerance of a case 30 or the type of battery cell 10.

In some embodiments of the disclosed technology, a particle-shaped insulating material 80 may uniformly fill an inner space while minimizing voids even when the structure and shape of the inner space of the case are complex due to its small diameter.

In an embodiment, the hardness of at least one particle-shaped insulating material 80 of a plurality of particle-shaped insulating materials 80 higher than or equal to a first hardness value and lower than or equal to a second hardness that is higher than the first hardness value, and the first hardness value may be higher than a hardness value at which the particle-shaped insulating material 80 is damaged by vibration.

In an embodiment, the hardness of the at least one of the plurality of particle-shaped insulating materials 80 may be higher than or equal to the first hardness value and less than or equal to the second hardness value. In an embodiment, the hardness of each of the plurality of particle-shaped insulating materials 80 may be higher than or equal to the first hardness value and less than or equal to the second hardness value. In some implementations, the second hardness value may have a value higher than the first hardness value. A higher hardness value may indicate that the surface of the material is harder.

In an embodiment, the first hardness value may be higher than the hardness value at which a particle-shaped insulating material 80 is damaged by vibration. The hardness value at which a particle-shaped insulating material 80 is damaged by vibration refers to the hardness at which the particle-shaped insulating material 80 has low strength and thus may be destroyed by vibration or impact so that its properties deteriorate. When the hardness of a particle-shaped insulating material 80 is lower than the first hardness value, the particle-shaped insulating material 80 may be damaged because it is unable to withstand the pressure caused by a gas or particles inside a case 30. In this case, the properties of the particle-shaped insulating material 80 such as thermal insulation may deteriorate, and the heat transfer of a battery cell 10 may not be suppressed.

In an embodiment, each of the plurality of battery cells 10 may include an electrode assembly and an exterior material accommodating the electrode assembly, and the second hardness value may be lower than the hardness value of the exterior material.

In an embodiment, second hardness value may be lower than the hardness of an exterior material of a battery cell 10. When the hardness of a particle-shaped insulating material 80 is higher than second hardness value, the particle-shaped insulating material 80 may damage exterior material of the battery cell 10. In this case, an electrode assembly of the battery cell 10 may be damaged and thus cause thermal runaway.

In an embodiment, the first hardness value may be Shore hardness A5. In other words, the hardness of a particle-shaped insulating material 80 may be Shore hardness A5 or higher. In an embodiment, the second hardness value may be Shore hardness A95. In other words, the hardness of a particle-shaped insulating material 80 may be Shore hardness A95 or lower. The above-described Shore hardness values A5 and A95 may be values classified based on a standardized Shore hardness test. In an embodiment, the Shore hardness may be measured based on ASTM D2240 conditions using a measuring device for Shore A grade. For example, a particle-shaped insulating material 80 may be pressed with a hardness meter of the measuring device and allowed to stand for 30 seconds, and then the value displayed on the measuring device may be read to measure the hardness. However, the disclosed technology is not limited to the examples discussed above, and it may be implemented with hardness values measured using various measuring methods.

In an embodiment, the withstand voltage for the diameter of one of the plurality of particle-shaped insulating materials 80 may be higher than or equal to a first withstand voltage. The diameter of a particle-shaped insulating material 80 may represent the thickness of the particle-shaped insulating material 80. The withstand voltage refers to the voltage at which electrical insulation is destroyed, and an overcurrent starts to flow when the voltage applied to a sample (e.g., a particle-shaped insulating material 80) of a specific thickness is increased. In other words, a high withstand voltage may indicate excellent electrical strength as an insulating material. In an embodiment, the withstand voltage may be measured under the ASTM D149 conditions. For example, a sample may be placed on a measuring device in a stabilized environment of 25 degrees Celsius, and the voltage may be increased at a rate of 0.5 kV/sec. Then, the test may be continuously performed until when an overcurrent flows through the sample, and the value at that time point may be recorded as the withstand voltage.

In an embodiment, each of the plurality of battery cells 10 may include an exterior material accommodating an electrode assembly and an electrode tab 15 protruding from the exterior material, and the first withstand voltage may be higher than a value obtained by dividing an overvoltage applied to the electrode tab 15 by the diameter D of at least one particle-shaped insulating material of the plurality of particle-shaped insulating materials 80.

In an embodiment, a first withstand voltage may be higher than an overvoltage applied to an electrode tab 15 (or bus bar 70) and a value corresponding to the diameter D. For example, an overvoltage applied to an electrode tab 15 (or bus bar 70) may vary depending on the operating environment of a battery assembly 100. A first withstand voltage may be set to a value higher than a value obtained by dividing an overvoltage by the diameter D in consideration of the operating environment of a battery assembly 100. When a withstand voltage of a particle-shaped insulating material 80 is lower than a first withstand voltage, the electrical insulation of the particle-shaped insulating material 80 may be destroyed by the overvoltage. In this case, a leakage current may flow through the particulate insulating material 80, potentially causing a short circuit that could lead to a fire accident.

In an embodiment, a first withstand voltage may be 1 kV/mm. In this case, the withstand voltage of a particle-shaped insulating material 80 may be 1 kV/mm or higher. Meanwhile, 1 kV/mm, which indicates a lower limit of a withstand voltage, is only an example, and the lower limit may be modified to various values depending on the type, number, voltage, and the like of a battery cell 10.

In an embodiment, a withstand voltage of a particle-shaped insulating material 80 may be lower than a second withstand voltage. In some implementations, the second withstand voltage may be higher than a first withstand voltage. In an embodiment, a second withstand voltage may be 30 kV/mm. In this case, the withstand voltage of a particle-shaped insulating material 80 may be 30 kV/mm or lower. For example, the cost may increase to ensure that a particle-shaped insulating material 80 has a withstand voltage exceeding 30 kV/mm.

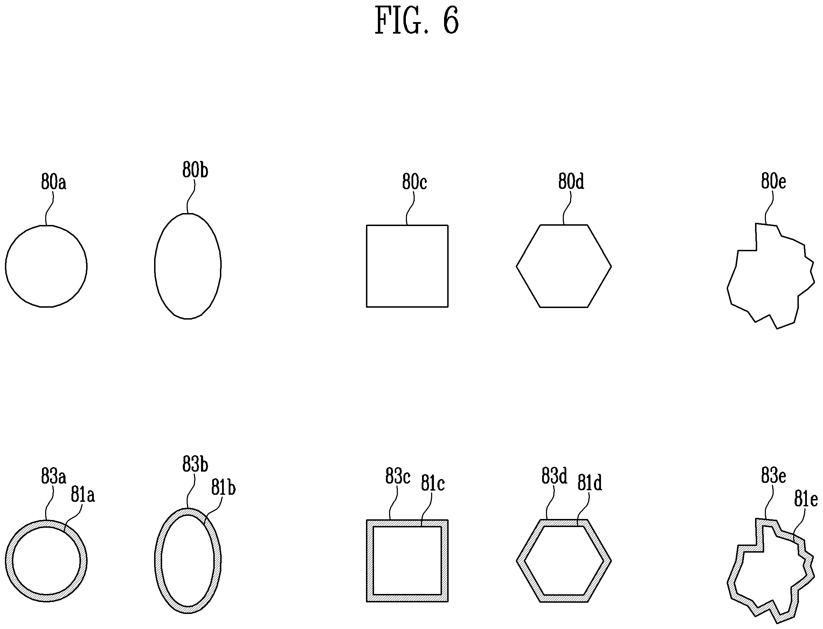

FIG. 6 shows a diagram illustrating the shapes of the particle-shaped insulating materials based on an embodiment.

Referring to FIGS. 5 and 6, the cross-sectional shape of one particle-shaped insulating material of a plurality of particle-shaped insulating materials 80 based on an embodiment may be one of a circular shape 80a, an elliptical shape 80b, a polygonal shape 80c and 80d, and an amorphous shape 80e. The cross-sectional shape of each of a plurality of particle-shaped insulating materials 80 based on an embodiment may be one of a circular shape 80a, an elliptical shape 80b, a polygonal shape 80c and 80d, and an amorphous shape 80e. For example, the cross-sectional shape may be a shape of a plane (e.g., an XY plane, a YZ plane, etc.) obtained by cutting a part of a particle-shaped insulating material 80.

In an embodiment, a particle-shaped insulating material 80 may include a core 81a to 81e and a coating portion 83a to 83e covering the surface of the core 81a to 81e. However, the disclosed technology is not limited these examples, and, for example, a coating portion 83a to 83e may be omitted.

In an embodiment, a core 81a to 81e may include at least one material of an inorganic material and a foam material, and a coating portion 83a to 83e may include at least one material of an inorganic material and a foam material. In an embodiment, an inorganic material may include at least one of materials such as silica gel, glass, and ceramics. In an embodiment, a foam material may include at least one of materials such as epoxy, urethane, polyurethane, polyolefin, urea resin, and phenol resin.

In an example, one of a core 81a to 81e and a coating portion 83a to 83e may include a material that is not included in the other. In other words, one of a core 81a to 81e and a coating portion 83a to 83e may include a different material from the other. For example, a core 81a to 81e may include an inorganic material, and a coating portion 83a to 83e may include a foam material. This is to supplement the insulation or hardness of an inorganic material through and a coating portion 83a to 83e. As another example, a core 81a to 81e may include a foam material, and a coating portion 83a to 83e may include an inorganic material. This is to relatively reduce the proportion of an inorganic material to lower the overall weight. In addition, various embodiments are possible. For example, a core 81a to 81e includes an inorganic material and a foam material, and a coating portion 83a to 83e includes a foam material.

It is understood by those skilled in the art that the plurality of exemplary embodiments described above are specific examples of the following aspects.

Aspect 1: A battery assembly comprising: a case; a plurality of battery cells accommodated in a first inner space of the case; and a plurality of particle-shaped insulating materials accommodated in a second inner space of the case.

Aspect 2: The battery assembly of Aspect 1, wherein at least one of the plurality of particle-shaped insulating materials has a hardness value that is higher than or equal to a first hardness value and lower than or equal to a second hardness value that is higher than the first hardness value, wherein the first hardness value is higher than a third hardness value at which the particle-shaped insulating material is damaged by vibration.

Aspect 3: The battery assembly of Aspects 1 or 2, wherein (a) the first hardness value is Shore hardness A5, and/or (b) the second hardness value is Shore hardness A95.

Aspect 4: The battery assembly of any one of Aspects 1 to 3, wherein each of the plurality of battery cells includes: an electrode assembly; and an exterior material structured to accommodate the electrode assembly, wherein the second hardness value is lower than a hardness value of the exterior material.

Aspect 5: The battery assembly of any one of Aspects 1 to 4, wherein each of the plurality of battery cells includes: an electrode assembly; a main body structured to accommodate the electrode assembly; and an electrode tab protruding from the main body, wherein the battery assembly further includes a busbar disposed between the main body of the plurality of battery cells and the case and electrically connected to the electrode tab, wherein a filling ratio of the particle-shaped insulating material disposed between the main body of the plurality of battery cells and a bus bar, among the plurality of particle-shaped insulating materials, is higher than the filling ratio of the particle-shaped insulating material disposed between the bus bar and the case.

Aspect 6: The battery assembly of any one of Aspects 1 to 5, wherein a withstand voltage corresponding to a diameter of at least one particle-shaped insulating material of the plurality of particle-shaped insulating materials is higher than or equal to a first withstand voltage.

Aspect 7: The battery assembly of Aspect 6, wherein each of the plurality of battery cells includes: an electrode assembly; an exterior material structured to accommodate the electrode assembly; and an electrode tab protruding from the exterior material, wherein the first withstand voltage is higher than a value obtained by dividing an overvoltage applied to the electrode tab by the diameter of at least one particle-shaped insulating material of the plurality of particle-shaped insulating materials.

Aspect 8: The battery assembly of Aspect 6, wherein (a) the first withstand voltage is 1 kV/mm, and/or (b) the withstand voltage of the particle-shaped insulating material is 30 kV/mm or less.

Aspect 9: The battery assembly of any one of Aspects 1 to 8, wherein a cross-sectional shape of the at least one of the plurality of particle-shaped insulating materials is at least one of a circular shape, an elliptical shape, a polygonal shape, or an amorphous shape.

Aspect 10: The battery assembly of any one of Aspects 1 to 9, wherein the at least one particle-shaped insulating material includes a core and a coating portion covering the core.

Aspect 11: The battery assembly of Aspect 10, wherein each of the core and the coating portion includes at least one of an inorganic material or a foam material, preferably wherein one of the core and the coating portion includes a material that is not included in the other.

Aspect 12: The battery assembly of any one of Aspects 1 to 11, wherein (a) the at least one of the plurality of particle-shaped insulating materials exhibits at least one property of thermal insulation and flame retardancy, and/or (b) a diameter of the at least one of the plurality of particle-shaped insulating materials is 1 mm or more and 15 mm or less.

Aspect 13: The battery assembly of any one of Aspects 1 to 12, wherein each of the plurality of battery cells includes an exterior material structured to accommodate an electrode assembly and an electrode tab protruding from the exterior material, wherein one or more of the plurality of particle-shaped insulating materials are disposed between the electrode tabs of the plurality of battery cells.

Aspect 14: The battery assembly of Aspect 13, further comprising: an auxiliary member disposed in a third inner space adjacent to the plurality of battery cells, wherein a proportion of a volume of a total volume of the plurality of particle-shaped insulating materials to a volume of the second inner space is 25% or more and 90% or less.

Aspect 15: The battery assembly of any one of Aspects 1 to 12, wherein the case includes an upper case disposed on an upper side of the plurality of battery cells, wherein one or more of the plurality of particle-shaped insulating materials are disposed between the plurality of battery cells and the upper case.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only a few embodiments and examples are described. Enhancements and variations of the disclosed embodiments and other embodiments can be made based on what is described and illustrated in this patent document.

## Claims

1. A battery assembly comprising:
a case;
a plurality of battery cells accommodated in a first inner space of the case; and
a plurality of particle-shaped insulating materials accommodated in a second inner space of the case.

2. The battery assembly of claim 1, wherein at least one of the plurality of particle-shaped insulating materials has a hardness value that is higher than or equal to a first hardness value and lower than or equal to a second hardness value that is higher than the first hardness value, wherein the first hardness value is higher than a third hardness value at which the particle-shaped insulating material is damaged by vibration.

3. The battery assembly of claims 1 or 2, wherein (a) the first hardness value is Shore hardness A5, and/or (b) the second hardness value is Shore hardness A95.

4. The battery assembly of any one of claims 1 to 3, wherein each of the plurality of battery cells includes: an electrode assembly; and an exterior material structured to accommodate the electrode assembly, wherein the second hardness value is lower than a hardness value of the exterior material.

5. The battery assembly of any one of claims 1 to 4, wherein each of the plurality of battery cells includes: an electrode assembly; a main body structured to accommodate the electrode assembly; and an electrode tab protruding from the main body, wherein the battery assembly further includes a busbar disposed between the main body of the plurality of battery cells and the case and electrically connected to the electrode tab, wherein a filling ratio of the particle-shaped insulating material disposed between the main body of the plurality of battery cells and a bus bar, among the plurality of particle-shaped insulating materials, is higher than the filling ratio of the particle-shaped insulating material disposed between the bus bar and the case.

6. The battery assembly of any one of claims 1 to 5, wherein a withstand voltage corresponding to a diameter of at least one particle-shaped insulating material of the plurality of particle-shaped insulating materials is higher than or equal to a first withstand voltage.

7. The battery assembly of claim 6, wherein each of the plurality of battery cells includes: an electrode assembly; an exterior material structured to accommodate the electrode assembly; and an electrode tab protruding from the exterior material, wherein the first withstand voltage is higher than a value obtained by dividing an overvoltage applied to the electrode tab by the diameter of at least one particle-shaped insulating material of the plurality of particle-shaped insulating materials.

8. The battery assembly of claim 6, wherein (a) the first withstand voltage is 1 kV/mm, and/or (b) the withstand voltage of the particle-shaped insulating material is 30 kV/mm or less.

9. The battery assembly of any one of claims 1 to 8, wherein a cross-sectional shape of the at least one of the plurality of particle-shaped insulating materials is at least one of a circular shape, an elliptical shape, a polygonal shape, or an amorphous shape.

10. The battery assembly of any one of claims 1 to 9, wherein the at least one particle-shaped insulating material includes a core and a coating portion covering the core.

11. The battery assembly of claim 10, wherein each of the core and the coating portion includes at least one of an inorganic material or a foam material, preferably wherein one of the core and the coating portion includes a material that is not included in the other.

12. The battery assembly of any one of claims 1 to 11, wherein (a) the at least one of the plurality of particle-shaped insulating materials exhibits at least one property of thermal insulation and flame retardancy, and/or (b) a diameter of the at least one of the plurality of particle-shaped insulating materials is 1 mm or more and 15 mm or less.

13. The battery assembly of any one of claims 1 to 12, wherein each of the plurality of battery cells includes an exterior material structured to accommodate an electrode assembly and an electrode tab protruding from the exterior material, wherein one or more of the plurality of particle-shaped insulating materials are disposed between the electrode tabs of the plurality of battery cells.

14. The battery assembly of claim 13, further comprising: an auxiliary member disposed in a third inner space adjacent to the plurality of battery cells, wherein a proportion of a volume of a total volume of the plurality of particle-shaped insulating materials to a volume of the second inner space is 25% or more and 90% or less.

15. The battery assembly of any one of claims 1 to 12, wherein the case includes an upper case disposed on an upper side of the plurality of battery cells, wherein one or more of the plurality of particle-shaped insulating materials are disposed between the plurality of battery cells and the upper case.
